(19) **Europäisches Patentamt / European Patent Office / Office européen des brevets**

(11) **EP 2 904 265 B1**

(12) **FASCICULE DE BREVET EUROPEEN**

(45) Date de publication et mention
de la délivrance du brevet:
**22.04.2020 Bulletin 2020/17**

(21) Numéro de dépôt: **13774723.4**

(22) Date de dépôt: **04.09.2013**

(51) Int Cl.:
*F03D 7/04* (2006.01)    *F03D 7/02* (2006.01)

(86) Numéro de dépôt international:
**PCT/FR2013/052040**

(87) Numéro de publication internationale:
**WO 2014/053718 (10.04.2014 Gazette 2014/15)**

(54) **PROCÉDÉ POUR CONTRÔLER UNE ÉOLIENNE AU MOYEN D'UNE ESTIMATION DE LA VITESSE DU VENT INCIDENT**

VERFAHREN ZUR STEUERUNG EINER WINDENERGIEANLAGE MIT EINER GESCHÄTZTEN WINDGESCHWINDIGKEIT

METHOD FOR CONTROLLING A WIND TURBINE WITH AN ESTIMATED INCIDENT WIND SPEED

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.10.2012 FR 1202601**

(43) Date de publication de la demande:
**12.08.2015 Bulletin 2015/33**

(73) Titulaire: **IFP Energies nouvelles**
**92500 Rueil-Malmaison (FR)**

(72) Inventeurs:
• **CHAUVIN, Jonathan**
**F-75017 Paris (FR)**
• **HAFIDI-RAMI YAHYAOUI, Ghizlane**
**F-92800 Puteaux (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
WO-A1-2007/010322    WO-A2-2012/025121
US-A- 5 155 375    US-A1- 2010 140 940

**Description**

La présente invention concerne le domaine des énergies renouvelables et plus particulièrement le contrôle des éoliennes.

Une éolienne permet de transformer l'énergie cinétique du vent en énergie électrique ou mécanique. Pour la conversion du vent en énergie électrique, elle se compose des éléments suivants :

- un mât permettant de placer un rotor à une hauteur suffisante pour permettre son mouvement (nécessaire pour les éoliennes à axe horizontal) ou de placer ce rotor à une hauteur lui permettant d'être entraîné par un vent plus fort et régulier qu'au niveau du sol. Le mât abrite généralement une partie des composants électriques et électroniques (modulateur, commande, multiplicateur, générateur, ...) ;

- une nacelle montée au sommet du mât, abritant des composants mécaniques, pneumatiques, certains composants électriques et électroniques, nécessaires au fonctionnement de la machine. La nacelle peut tourner pour orienter la machine dans la bonne direction ;

- un rotor, fixé à la nacelle, comprenant plusieurs pales (en général trois) et le nez de l'éolienne. Le rotor est entraîné par l'énergie du vent, il est relié par un arbre mécanique directement ou indirectement (via un système de boite de vitesse et d'arbre mécanique) à une machine électrique (générateur électrique...) qui convertit l'énergie recueillie en énergie électrique ;

- une transmission, composée de deux axes (arbre mécanique du rotor et arbre mécanique de la machine électrique) reliés par une transmission (boite de vitesse).

Depuis le début des années 1990, l'énergie éolienne a connu un regain d'intérêt, en particulier dans l'Union Européenne où le taux de croissance annuel est d'environ 20 %. Cette croissance est attribuée à la possibilité inhérente de production d'électricité sans émissions de carbone. Afin de soutenir cette croissance, le rendement des éoliennes doit continuer à être amélioré. La perspective d'augmentation de production d'énergie éolienne nécessite le développement d'outils de production efficaces, et d'outils de contrôle avancé pour améliorer les performances des machines. Les éoliennes sont conçues pour produire de l'électricité à un prix aussi bas que possible. Par conséquent, les éoliennes sont en général construites de manière à atteindre leur performance maximale pour une vitesse du vent d'environ 15 m/s. Il est en fait inutile de concevoir des éoliennes qui maximalisent leur rendement à des vitesses de vent plus élevées, celles-ci étant peu fréquentes. En cas de vitesses de vent supérieures à 15 m/s, il est nécessaire de perdre une partie de l'énergie supplémentaire contenue dans le vent afin d'éviter tout endommagement de l'éolienne. Toutes les éoliennes sont donc conçues avec un système de régulation de la puissance.

Pour cette régulation de la puissance, des contrôleurs sont conçus pour des aérogénérateurs à vitesse variable, voir par exemple US 5, 155,375. Les objectifs des contrôleurs sont de maximiser la puissance électrique récupérée, de minimiser les fluctuations de vitesse du rotor et de minimiser la fatigue et les moments extrêmes de la structure (pales, mât et plate-forme).

Des contrôleurs linéaires ont été largement utilisés pour la régulation de puissance par le contrôle de l'angle d'inclinaison des pales (orientation des pales). Il s'agit notamment de techniques utilisant des contrôleurs PI (proportionnel intégral) et PID (proportionnel intégral dérivé), de techniques de contrôle LQ (contrôleur linéaire et quadratique de l'anglais Linear Quadratic) et de stratégies basées sur des commandes linéaires robustes.

Toutefois, les performances de ces contrôleurs linéaires sont limitées par les caractéristiques fortement non linéaires de l'éolienne. Des premières stratégies basées sur des commandes non linéaires ont été développées, une telle stratégie est décrite par exemple dans le document : Boukhezzar B., Lupu L., Siguerdidjane H., Hand M. "Multivariable control strategy for variable speed, variable pitch wind turbines" Renewable Energy, 32 (2007) 1273-1287.

Cependant, aucune de ces stratégies n'utilise la vitesse incidente du vent qui est une donnée fondamentale pour les phénomènes aérodynamiques qui pilotent l'éolienne. Pour prendre en compte cette composante, des premiers travaux ont été réalisés avec une mesure de la vitesse du vent. Ces travaux montrent que l'on peut augmenter fortement la productivité d'une éolienne et son temps de vie grâce à des stratégies innovantes utilisant la vitesse du vent.

Malheureusement, cette technique nécessite un capteur qui est cher et qui n'est pas très précis. Pour prendre en compte la vitesse du vent incident sans capteur, on peut réaliser une estimation de ce vent pour pouvoir utiliser cette donnée dans le contrôle. Des travaux ont été réalisés dans ce sens avec l'utilisation d'un filtre de Kalman, une telle méthode étant décrite dans le document : Boukhezzar B., Siguerdidjane H.,. "Nonlinear control of variable speed wind turbine without wind speed measurement" IEEE Control and Decision Conférence (2005). Cette méthode est peu précise car la reconstruction de vent est peu représentative. En effet, selon cette méthode, le vent n'est pas structuré, il est considéré comme un bruit blanc ce qui n'est pas le cas expérimentalement.

L'objet de l'invention concerne un procédé pour contrôler une éolienne, dans le but d'optimiser l'énergie produite, le contrôle prend en compte une estimation de la vitesse du vent incident pour obtenir un contrôle optimal. L'estimation de la vitesse du vent est réalisée en prenant en compte les dynamiques du système, à partir de la mesure de la vitesse du rotor, du couple imposé au générateur et de l'orientation des pâles de l'éolienne pour une estimation précise.

**Le procédé selon l'invention**

L'invention concerne un procédé de contrôle d'une éolienne, ladite éolienne comportant un rotor sur lequel est fixée au moins une pale, et une machine électrique reliée audit rotor, dans lequel on connaît un angle d'inclinaison $\theta$ de ladite pale et un couple électrique $T_e$ de récupération de ladite machine électrique. Ce procédé comporte les étapes suivantes :

a) on construit un modèle de dynamique dudit rotor en appliquant le principe fondamental de la dynamique au niveau dudit rotor, ledit modèle reliant la vitesse du vent incident à ladite éolienne $V_w$ à une vitesse de rotation dudit rotor $Q_r$, audit angle d'inclinaison $\theta$ de ladite pale et audit couple électrique $T_e$ ;
b) on mesure ladite vitesse de rotation dudit rotor $\Omega_r$ ;
c) on détermine ladite vitesse du vent incident $V_w$ au moyen dudit modèle de dynamique du rotor, de ladite vitesse de rotation dudit rotor $Q_r$ mesurée et dudit angle d'inclinaison $\theta$ de ladite pale et dudit couple électrique $T_e$ ; et
d) on contrôle ledit angle d'inclinaison $\theta$ de ladite pale et/ou ledit couple électrique $T_e$ de récupération en fonction de ladite vitesse du vent incident $V_w$ pour optimiser la production d'énergie de ladite éolienne.

Selon l'invention, ledit modèle de dynamique du rotor s'écrit par une formule du type :

$$J_r \frac{d\Omega_r}{dt} = T_{aero} - T_l(\Omega_r) - NT_e$$

$J_r$ avec $J_r$ l'inertie dudit rotor, $T_{aéro}$ le couple aérodynamique appliqué sur ledit rotor qui dépend de ladite vitesse du vent incident $V_w$, de ladite vitesse de rotation dudit rotor $\Omega_r$ et dudit angle d'inclinaison $\theta$, $T_l(\Omega_r)$ le couple de frottement et de charge sur le rotor qui dépend de ladite vitesse de rotation dudit rotor $\Omega_r$, N le rapport de transmission entre ledit rotor et ladite machine électrique.

Avantageusement, ledit couple aérodynamique appliqué sur ledit rotor s'écrit par une formule de la forme :

$$T_{aero} = 0.5\rho\Pi R_b^3 c_q\left(\theta, \frac{R_b\Omega_r}{V_w}\right)V_w^2$$

avec $R_b$ le rayon dudit rotor, $\rho$ la densité de l'air, $c_q$ est un paramètre déterminé au moyen d'un cartographie du rotor en fonction dudit angle d'inclinaison $\theta$ et du rapport $\frac{R_b\Omega_r}{V_w}$.

Selon un mode de réalisation de l'invention, ladite vitesse du vent incident $V_w$ étant considérée comme une perturbation harmonique, ladite vitesse du vent incident $V_w$ pouvant s'écrire par une formule du type :

$$V_w(t) = \sum_{k=-p}^{p} c_k e^{(i\omega_k t)}$$

avec p le nombre d'harmoniques considérés, $\omega_k$ est la fréquence de l'harmonique k, $c_k$ le coefficient de l'harmonique k, on détermine ladite vitesse du vent incident $V_w$ en déterminant les paramètres $\omega_k$ et $c_k$ au moyen dudit modèle dynamique du rotor, puis on en déduit ladite vitesse du vent incident $V_w$.

De préférence, on détermine ladite fréquence de l'harmonique k au moyen d'une formule du type : $\omega_k = 3\frac{k}{p}$.
$\omega_k$

De manière avantageuse, on détermine les coefficients $c_k$ en résolvant un système d'équations de la forme:

$$\left\{ \begin{array}{l} J_r \dfrac{d\Omega_r}{dt} = 0.5\rho\Pi R_b^3 c_q\left(\theta, \dfrac{R_b\Omega_r}{\displaystyle\sum_{k=-p}^{p} c_k e^{(i\omega_k t)}}\right)\left(\displaystyle\sum_{k=-p}^{p} c_k e^{(i\omega_k t)}\right)^2 - T_l(\Omega_r) - NT_e - J_r L_\Omega(\Omega_r - \Omega) \\[4mm] \dfrac{dc_k}{dt} = -L_k e^{(-i\omega_k t)}(\Omega_r - \Omega) \quad pour\ tout\ k \in [-p, p] \end{array} \right.$$

avec $L_\Omega$ un gain qui contrôle la vitesse de convergence de l'estimation de ladite vitesse de rotation du rotor, $L_k$ un gain qui contrôle la vitesse de convergence de la décomposition harmonique, et $\Omega$ représente la vitesse mesurée du rotor. De manière préférentielle, ledit gain $L_\Omega$ vaut sensiblement 1 et ledit gain $L_k$ est déterminé par une formule du type :

$$L_k = \frac{10}{1 + \omega_k^2}.$$

De plus, on peut contrôler ledit angle d'inclinaison $\theta$ au moyen des étapes suivantes :

i) on détermine une consigne de couple aérodynamique $T_{aero}^{sp}$ et une consigne de couple de la machine électrique $T_e^{sp}$ permettant de maximiser la puissance récupérée, à partir de ladite vitesse de vent incident $V_w$, de mesures de ladite vitesse de rotation du rotor $\Omega_r$ et de la vitesse de rotation de l'arbre de la machine électrique $\Omega_e$ ;

ii) on modifie au moins l'une desdites consignes en lui soustrayant un terme proportionnel à un écart entre vitesse mesurée du rotor $\Omega_r$ et vitesse mesurée de la machine électrique $\Omega_e$ ;

iii) on détermine un angle d'inclinaison $\theta^{sp}$ de ladite pale permettant de réaliser ladite consigne de couple aérodynamique $T_{aero}^{sp}$ ; et

iv) on oriente ladite pale selon ledit angle d'inclinaison $\theta^{sp}$.

De préférence, on modifie au moins l'une desdites consignes en réalisant les étapes suivantes :

(1) on détermine un couple $\overline{T}_{res}$ sur ladite transmission résultant desdites consignes de couple aérodynamique $T_{aero}^{sp}$ et de couple de la machine électrique $T_e^{sp}$ ;

(2) on détermine une consigne de couple résultant $T_{res}^{sp}$ en soustrayant audit couple résultant $\overline{T}_{res}$ un terme pro-portionnel à l'écart entre la vitesse mesurée du rotor $Q_r$ et la vitesse mesurée de la machine électrique $\Omega_e$ ; et

(3) on modifie ladite consigne de couple aérodynamique $T_{aero}^{sp}$ en répartissant ladite consigne de couple résultant $T_{res}^{sp}$ en un couple aérodynamique $T_{aero}^{sp}$ et un couple de la machine électrique $T_e^{sp}$.

Selon un mode de réalisation de l'invention, ladite consigne de couple résultant $T_{res}^{sp}$ s'écrit :

$$T_{res}^{sp} = \overline{T_{res}} - k\dot{\gamma}_{tr}$$

avec k des paramètres de calibration strictement positif, et $\dot{\gamma}_{tr}$ vitesse d'une torsion de la transmission, égale à une différence de vitesse du rotor $\Omega_r$ et de la machine électrique $\Omega_e$ ramenée sur un même axe :

$$\dot{\gamma}_{tr} = \Omega_r - \frac{1}{N}\Omega_e,$$

où N est un rapport de transmission entre ledit rotor et ladite machine électrique.

En outre, on peut déterminer l'angle d'inclinaison de ladite pale en inversant un modèle de couple aérodynamique et en utilisant ladite vitesse de vent incident $V_w$ et la mesure de la vitesse du rotor $\Omega_r$.

Avantageusement, on détermine le terme proportionnel en utilisant un modèle de la dynamique de la transmission.

## Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.

La figure 1 illustre les étapes du procédé selon l'invention.

La figure 2 illustre les étapes du procédé selon un mode de réalisation de l'invention.

La figure 3 représente une cartographie du rotor donnant le coefficient $c_q$ en fonction de l'angle d'inclinaison $\theta$ et du rapport $\dfrac{R_b \Omega_r}{V_w}$.

La figure 4 illustre les étapes de contrôle de l'éolienne selon un mode de réalisation de l'invention.

## Description détaillée de l'invention

L'invention concerne un procédé de contrôle d'une éolienne à axe horizontal sur terre ou en mer ("offshore"), dans lequel on contrôle l'angle d'inclinaison des pales et/ou le couple électrique de récupération de la machine électrique pour optimiser l'énergie récupérée.

Notations

Au cours de la description, les notations suivantes sont utilisées :

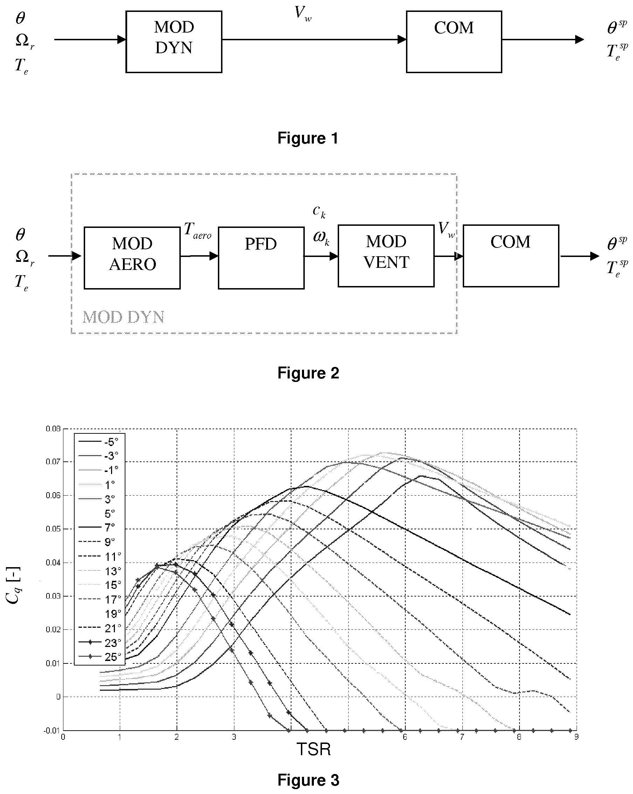

- $\theta$ : angle d'inclinaison des pales, il s'agit de l'angle entre les pales et une référence tel que le sol (plan horizontal, perpendiculaire au mât de l'éolienne), cette inclinaison peut être commandée par le procédé selon l'invention, cet angle est appelé également "pitch".
- $T_e$ : couple électrique de récupération de la machine électrique, ce couple peut être commandé par le procédé selon l'invention.
- $V_w$ : vitesse du vent incident aux pales de l'éolienne, cette vitesse est estimée par le procédé selon l'invention.
- $\Omega_r$ : vitesse de rotation du rotor de l'éolienne, cette vitesse peut être mesurée.
- $\Omega_e$ : vitesse de rotation de l'arbre de la machine électrique, cette vitesse peut être mesurée.
- $J_r$ : inertie du rotor de l'éolienne, il s'agit d'une valeur connue.
- $J_g$ : inertie de la machine électrique.
- $T_{aero}$ : couple aérodynamique appliqué sur le rotor, il s'agit de l'effort en rotation appliqué au rotor sous l'effet du vent.
- $T_l$ : couple de frottement et de charge sur le rotor, ce couple peut être déterminé par un polynôme d'ordre deux de la vitesse de rotation du rotor $\Omega_r$.
- $N$ : rapport de transmission entre le rotor et la machine électrique.
- $R_b$ : rayon du rotor.
- $\rho$ : densité de l'air. La densité varie en fonction de la température et la pression atmosphérique. Elle est généralement autour de 1,2 kg/m^3.
- $c_q$ : coefficient donné par une cartographie du rotor en fonction de l'angle d'inclinaison $\theta$ et du rapport $\dfrac{R_b \Omega_r}{V_w}$, la figure 3 est un exemple de cartographie utilisée pour déterminer le coefficient.
- $c_k$ : coefficient de l'harmonique k de la décomposition harmonique de la vitesse de vent incident $V_w$.
- $\omega_k$ : fréquence de l'harmonique k de la décomposition harmonique de la vitesse de vent incident $V_w$.
- $p$ : nombre d'harmoniques considérés pour la décomposition harmonique de la vitesse du vent incident $V_w$.
- $L_\Omega$ : gain qui contrôle la vitesse de convergence de l'estimation de la vitesse du rotor.
- $L_k$ : gain qui contrôle la vitesse de convergence de la décomposition harmonique de la vitesse de vent incident $V_w$.
- $\overline{T}_{res}$ : couple résultant sur la transmission entre le rotor et la machine électrique.
- $\dot{\gamma}_{tr}$ : vitesse de torsion de la transmission entre le rotor et la machine électrique.

Ces notations, indexées par la mention $^{-sp}$, représentent les consignes associées aux grandeurs considérées.

La figure 1 représente le procédé selon l'invention. Les étapes du procédé selon l'invention sont les suivantes :

1) Mesure de la vitesse de rotation du rotor $\Omega_r$

2) Construction d'un modèle de dynamique du rotor (MOD DYN)

3) Commande de l'éolienne (COM)

Étape 1) Mesure de la vitesse de rotation du rotor

La vitesse de rotation du rotor $\Omega_r$ est mesurée lors du fonctionnement de l'éolienne, notamment par un capteur de rotation.

Étape 2) Construction d'un modèle de dynamique du rotor (MOD DYN)

En premier lieu, on détermine l'angle d'inclinaison $\theta$ actuel des pales ainsi que le couple électrique de récupération $T_e$, par mesure (par exemple par capteur) ou en fonction de la commande appliquée aux actionneurs pour modifier ces paramètres.

Ensuite, on construit un modèle de dynamique du rotor. On appelle un modèle de dynamique du rotor un modèle représentant les phénomènes dynamiques appliqués au rotor. Ce modèle est obtenu par application du principe fondamental de la dynamique au rotor, le modèle permet de relier la vitesse du vent incident $V_w$ à une vitesse de rotation du rotor $\Omega_r$, à l'angle d'inclinaison $\theta$ de ladite pale et au couple électrique $T_e$ de la machine électrique.

On applique alors ce modèle de dynamique du rotor avec des données connues : $\theta$ et $T_e$ et à la valeur mesurée : $\Omega_r$, ce qui permet donc de déterminer la vitesse du vent incident $V_w$.

La figure 2 représente un mode de réalisation du procédé selon l'invention. Pour ce mode de réalisation, le modèle dynamique du rotor (MOD DYN) est construit au moyen d'un modèle du couple aérodynamique (MOD AERO), du principe fondamental de la dynamique (PFD) appliqué au rotor et d'un modèle de vent (MOD VENT).

*Modèle de couple aérodynamique (MOD AERO)*

Selon ce mode de réalisation de l'invention, on modélise le couple aérodynamique $T_{aero}$ par un modèle décrivant la puissance du vent contenue dans un cylindre, multiplié par un facteur décrivant le fait qu'une éolienne ne permet de récupérer qu'une partie de cette puissance. On modélise ainsi le couple aérodynamique $T_{aero}$ en fonction de la vitesse du vent incident $V_w$, du pitch $\theta$ et de la vitesse du rotor $\Omega_r$. Un tel modèle peut s'écrire ainsi en régime stabilisé :

$$T_{aero} = 0.5 \rho \Pi R_b^3 c_q \left( \theta, \frac{R_b \Omega_r}{V_w} \right) V_w^2 \,.$$

Le paramètre $c_q$ peut être déterminé au moyen d'une cartographie du rotor. Un exemple de cartographie du paramètre $c_q$ est présenté sur la figure 3. Cette cartographie indique la valeur du paramètre $c_q$ en fonction du rapport

$$\frac{R_b \Omega_r}{V_w}\,,$$

pour différents pitchs (une courbe pour chaque $\theta$). Ce type de cartographies est bien connu des spécialistes.

Le rapport $\dfrac{R_b \Omega_r}{V_w}$ est noté TSR sur la figure 3.

Par conséquent, on peut écrire le couple aérodynamique $T_{aero}$ en fonction de grandeurs liées à l'éolienne ($\rho, R_b$), de la valeur connue ($\theta$) et de la vitesse du vent incident, qu'on cherche à estimer ($V_w$).

*Principe fondamental de la dynamique (PFD)*

En écrivant le principe fondamental de la dynamique appliqué au rotor, en ce qui concerne les moments sur son axe de rotation, on a une relation du type :

$$J_r \frac{d\Omega_r}{dt} = T_{aero} - T_l(\Omega_r) - N T_e \,.$$

Dans cette relation, on utilise le couple aérodynamique $T_{aero}$ déterminé avec le modèle de couple aérodynamique précédemment décrit. De plus, le couple de frottement et de charge sur le rotor $T_l$ peut être déterminé, de manière classique, par un polynôme d'ordre deux de la vitesse de rotation du rotor $\Omega_r$.

En combinant les deux modèles, on peut donc établir une relation entre la vitesse du vent incident $V_w$, et les grandeurs connues ou mesurées qui sont l'angle d'inclinaison $\theta$ des pales, le couple électrique de récupération $T_e$ et la vitesse de rotation du rotor $\Omega_r$.

*Modélisation du vent incident (MOD VENT)*

La dernière étape de modélisation est de considérer le vent comme une perturbation harmonique. Cela signifie que l'on suppose que le vent s'écrit sous la forme :

$$V_w(t) = \sum_{k=-p}^{p} c_k e^{(i\omega_k t)}$$

avec p le nombre d'harmoniques considérés pour la décomposition harmonique du vent, par exemple, on peut choisir p = 50.

Par ailleurs, pour la fréquence des harmoniques on peut choisir $\omega_k = 3\dfrac{k}{p}$ Hz (avec k>0).

En combinant les trois modèles présentés ci-dessus, on peut obtenir un modèle dynamique de la forme :

$$\begin{cases} J_r \dfrac{d\Omega_r}{dt} = 0.5\rho\Pi R_b^3 c_q\left(\theta, \dfrac{R_b\Omega_r}{\sum_{k=-p}^{p} c_k e^{(i\omega_k t)}}\right)\left(\sum_{k=-p}^{p} c_k e^{(i\omega_k t)}\right)^2 - T_l(\Omega_r) - NT_e \\ \\ \dfrac{dc_k}{dt} = 0 \quad pour\ tout\ k \in [-p, p] \end{cases}$$

A partir de ce système d'équations, on peut construire un observateur, qui permet de déterminer les coefficients $c_k$ de la décomposition harmonique du vent incident. L'observateur peut s'écrire de la forme :

$$\begin{cases} J_r \dfrac{d\Omega_r}{dt} = 0.5\rho\Pi R_b^3 c_q\left(\theta, \dfrac{R_b\Omega_r}{\sum_{k=-p}^{p} c_k e^{(i\omega_k t)}}\right)\left(\sum_{k=-p}^{p} c_k e^{(i\omega_k t)}\right)^2 - T_l(\Omega_r) - NT_e - J_r L_\Omega(\Omega_r - \Omega) \\ \\ \dfrac{dc_k}{dt} = -L_k e^{(-i\omega_k t)}(\Omega_r - \Omega) \quad pour\ tout\ k \in [-p, p] \end{cases}$$

où $\Omega$ représente la vitesse mesurée du rotor.
dans lequel $L_\Omega$ un gain qui contrôle la vitesse de convergence de l'estimation de la vitesse du rotor, ce gain doit être positif, on peut le choisir égal à 1 par exemple et $\{L_k\}_{k\in[-p,p]}$ un gain qui contrôle la vitesse de convergence de la décomposition harmonique. Ces gains doivent être positifs, on peut les choisir égaux à $\dfrac{10}{1+\omega_k^2}$ par exemple.

Ce dernier système d'équations représente un estimateur non linéaire de type adaptatif permettant d'estimer les coefficients $c_k$ de la décomposition harmonique du signal de vent incident $V_w$.

Cette méthode assure la reconstruction de l'excitation du vent $V_w$ à travers les coefficients $c_k$. Le vent reconstruit $V_w$ est donné par la relation suivante :

$$V_w(t) = \sum_{k=-p}^{p} c_k e^{(i\omega_k t)}$$

Étape 3) Commande de l'éolienne (COM)

En fonction de la vitesse du vent incident $V_w$, on contrôle l'éolienne de manière à optimiser l'énergie récupérée. Selon l'invention, on peut commander l'angle d'inclinaison des pales $\theta$ et/ou le couple électrique de récupération $T_e$ en fonction du vent incident $V_w$.

Selon un mode de réalisation de l'invention, l'angle d'inclinaison des pales $\theta$ et/ou le couple électrique de récupération $T_e$ sont déterminés au moyen de cartographies de l'éolienne en fonction du vent incident $V_w$.

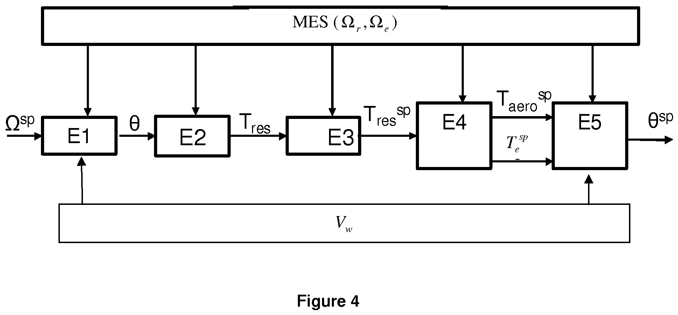

Alternativement, selon un mode de réalisation de l'invention illustré en figure 4, on peut commander l'angle $\theta$ d'inclinaison des pales au moyen des étapes suivantes :

E1. Détermination du pitch permettant d'optimiser la puissance récupérée

    *i- Génération d'une consigne de couple électrique* $T_e^{sp}$

    *ii - Génération d'une consigne de couple aérodynamique* $T_{aero}^{sp}$

    *iii - Détermination d'une position de pitch* $\theta$

E2. Détermination du couple résultant des consignes de couples $T_e^{sp}$ et $T_{aero}^{sp}$

E3. Génération d'une consigne de couple résultant $\left(T_{res}^{sp}\right)$ qui diminue la fatigue et les moments extrêmes de la transmission

E4. Répartition du couple résultant consigne $\left(T_{res}^{sp}\right)$ entre les couples aérodynamiques et électriques

E5. Détermination d'une position de pitch qui permet de réaliser ce couple aérodynamique

E6. Orientation des pales selon le pitch déterminé

*1. Détermination du pitch permettant d'optimiser la puissance récupérée*

Un objectif du procédé selon l'invention est de maximiser la production d'énergie d'une éolienne à axe horizontal (hélice perpendiculaire au vent), implantée sur terre ("onshore") ou en mer ("offshore"), tout en limitant les moments extrêmes et la fatigue de la structure mécanique.

Pour maximiser la production d'énergie d'une éolienne on recherche l'angle d'inclinaison des pales, appelée « pitch » et notée $\theta$, permettant de maximiser la puissance récupérée $P_{aero}$ en fonction de la vitesse du vent incident $V_w$ déterminée à l'étape de construction du modèle de dynamique du rotor.

Selon un mode de réalisation, pour définir cet angle, on utilise un modèle de la puissance récupérable. Cette puissance $P_{aero}$ peut s'écrire :

$$P_{aero} = T_{aero} * \Omega_r$$

On recherche donc l'angle $\theta$ qui permet de maximiser $P_{aero}$. Pour ce faire, on réalise les étapes suivantes :

    • i. - Génération d'une consigne de couple de la machine électrique $T_e^{sp}$

    • ii - Génération d'une consigne de couple aérodynamique $T_{aero}^{sp}$

    • iii - Détermination d'une position de pitch $\theta$

*i- Génération d'une consigne couple de la machine électrique* $T_e^{sp}$

On détermine dans un premier temps une consigne couple de la machine électrique $T_e^{sp}$. Cette consigne est obtenue au moyen d'une cartographie en fonction de la vitesse de la machine électrique.

Selon l'invention, on modélise le couple aérodynamique $T_{aero}$ par le modèle aérodynamique tel que décrit dans la partie construction du modèle dynamique.

$$T_{aero} = 0.5 \rho \Pi R_b^3 c_q \left( \theta, \frac{R_b \Omega_r}{V_w} \right) V_w^2$$

Ainsi, pour déterminer la consigne de couple de la machine électrique en fonction de la vitesse de la machine électrique, on optimise la puissance aérodynamique récupérée pour chaque vitesse du vent.

$$T_e^{sp} = \arg\left( \max_{\theta, V_w} \frac{0.5}{N} \rho \Pi R_b^3 c_q \left( \theta, \frac{R_b \Omega_g}{N V_w} \right) V_w^2 \right)$$

Cela permet d'avoir le couple consigne $T_e$ qui dépend de la vitesse de rotation de l'arbre de la machine électrique : $T_e^{sp} = f(\Omega_e)$.

Cependant, par rapport à cette courbe de référence, on applique deux limitations :

- un couple nul pour les faibles vitesses de la machine électrique pour pouvoir augmenter la vitesse de l'éolienne ;
- un couple maximum pour limiter la puissance de la machine électrique. Ainsi, on a trois régions sur la courbe $T_e^{sp} = f(\Omega_e)$ :
- Région 1 : à couple nul ;
- Région 2 : à couple optimal ;
- Région 3 : à couple limité par la puissance maximum.

*ii - Génération d'une consigne de couple aérodynamique $T_{aero}^{sp}$*

Le but est de générer une consigne de couple aérodynamique $T_{aero}^{sp}$ permettant de réaliser la vitesse de rotation de rotor consigne $\Omega_r^{sp}$. Pour cela, on utilise le modèle de la dynamique du rotor.

$$J_r \frac{d\Omega_r}{dt} = T_{aero} - T_l(\Omega_r) - N T_e(\Omega_e)$$

Ainsi, la stratégie de contrôle utilisée est une stratégie de contrôle dynamique qui anticipe la variation de consigne et qui corrige avec deux termes, un terme proportionnel et un terme intégral. La stratégie s'écrit par une relation de la forme :

$$T_{aero}^{sp} = T_l(\Omega_r) + N T_e(\Omega_r) + J_r \frac{d\Omega_r^{sp}}{dt} - k_p (\Omega_r - \Omega_r^{sp}) - k_i \int (\Omega_r - \Omega_r^{sp})$$

où kp et ki sont deux paramètres réels à calibrer pour garantir la convergence de la vitesse vers sa consigne.

*iii - Détermination d'une position de pitch $\theta$*

A partir de cette consigne de couple aérodynamique $T_{aero}^{sp}$, on détermine un angle d'inclinaison $\theta$ des pales pour satisfaire cette demande de couple aérodynamique $T_{aero}^{sp}$. Pour cela, on utilise le modèle de couple aérodynamique, avec la vitesse du vent incident $V_w$ déterminée lors de l'étape de construction du modèle de dynamique du rotor, la mesure du régime du rotor $\Omega_r^{sp}$ et le couple consigne $T_{aero}^{sp}$. En inversant le modèle (par un algorithme de Newton par exemple), on obtient une consigne de pitch $\overline{\theta}$ :

$$\overline{\theta} = \arg\left( \min_{\theta} \left( T_{aero}^{sp} - 0.5\rho\Pi R_b^3 c_q\left(\theta, \frac{R_b\Omega_r}{V_w}\right) V_w^{\;2}\right)^2 \right)$$

Ainsi, avec cette loi de commande, on garantit la convergence vers la vitesse rotor de référence, permettant de maximiser la puissance récupérée.

*2 - Détermination du couple résultant des consignes de couples $T_e^{sp}$ et $T_{aero}^{sp}$*

A partir des consignes $T_e^{sp}$ et $T_{aero}^{sp}$, on détermine le couple $\overline{T}_{res}$ résultant de ces deux couples et qui va porter sur la transmission. Pour cela, on modélise ce couple par la formule suivante :

$$\overline{T}_{res} = \frac{J_g}{J_r + J_g}(T_{aero}^{sp} - T_l) + \frac{J_r}{J_r + J_g}NT_e^{sp}$$

où $J_r$ et $J_g$ sont les inerties respectivement du rotor et de la machine électrique.

*3 - Génération d'une consigne de couple résultant $(T_{res}^{sp})$ qui diminue la fatigue et les moments de la transmission*
On cherche à modifier ce couple résultant $\overline{T}_{res}$ afin de minimiser l'impact sur la transmission et donc augmenter sa durée de vie. Pour cela, on cherche à diminuer les variations de vitesse de torsion de la transmission. Ainsi, on va chercher à compenser le couple avec des termes proportionnels à l'écart entre la vitesse du rotor et de la machine électrique. La dynamique de la structure mécanique (dynamique de la transmission) peut s'écrire sous la forme de deux systèmes du deuxième ordre couplés.

$$\begin{cases} \dfrac{J_r J_g}{J_r + J_g}\ddot{\gamma}_{tr} = -c_d\gamma_{tr} - k_d\dot{\gamma}_{tr} + \dfrac{J_g}{J_r + J_g}(T_{aero} - T_l) + \dfrac{J_r}{J_r + J_g}NT_e \\ J_g\dot{\Omega}_e = c_d\gamma_{tr} + k_d\dot{\gamma}_{tr} + N_{gb}T_e \end{cases}$$

où

- $\gamma_{tr}$, $\dot{\gamma}_{tr}$ et $\ddot{\gamma}_{tr}$ sont respectivement l'angle, la vitesse et l'accélération de la torsion de l'arbre. Il faut noter que la vitesse de torsion de la transmission est la différence de vitesse du rotor et de la génératrice ramenée sur le même axe, *i.e.* $\dot{\gamma}_{tr} = \Omega_r - \dfrac{1}{N}\Omega_e$ ;
- $k_d$ est l'amortissement structurel de la transmission ;

- $c_d$ est la raideur de la transmission ;
- $N_{gb}$ est le rapport de la boite de vitesse, c'est à dire le ratio entre la vitesse du générateur et la vitesse du rotor.

Ainsi, la stratégie de contrôle cherche à générer un couple résultant différent de $\overline{T}_{res}$ pour minimiser la fatigue et les moments extrêmes de la transmission. Nous allons donc avoir :

$$T_{res}^{sp} = \overline{T_{res}} - k\dot{\gamma}_{tr}$$

avec k des paramètres de calibration strictement positif. Ces paramètres peuvent être déterminés expérimentalement par un spécialiste. On peut considérer que tous ces paramètres k sont égaux à 1 par exemple.

4 - *Répartition du couple résultant consigne* $(T_{res}^{sp})$ *entre les couples aérodynamiques et électriques*

Cette consigne de couple résultant $T_{res}^{sp}$ est ensuite réparti entre le couple aérodynamique $T_{aero}$ et le couple de la machine électrique $T_e$. Pour cela, la répartition se fait en fonction des zones opératoires. Dans une zone 2, où le couple aérodynamique est limitant, nous avons une réserve de couple. Dans ce cas, la modification de couple influe sur le couple de la machine électrique et non sur le couple aérodynamique. Ainsi, dans ce cas, nous avons :

$$\begin{cases} T_{aero}^{strat} = T_{aero}^{sp} \\ T_e^{strat} = T_e^{sp} - k\dfrac{J_r + J_g}{NJ_r}\dot{\gamma}_{tr} \end{cases}$$

De la même manière dans une zone 3 où le couple de la machine électrique est limitant, la modification de couple influe sur le couple aérodynamique ce qui donne :

$$\begin{cases} T_{aero}^{strat} = T_{aero}^{sp} - k\dfrac{J_r + J_g}{J_g}\dot{\gamma}_{tr} \\ T_e^{strat} = T_e^{sp} \end{cases}$$

5 - *Détermination d'une position de pitch qui permet de réaliser ce couple aérodynamique.*

A partir de cette consigne de couple aérodynamique $T_{aero}^{strat}$, on détermine un angle d'inclinaison $\theta$ des pales pour satisfaire cette demande de couple aérodynamique $T_{aero}^{strat}$. Pour cela, on utilise le modèle de couple aérodynamique, avec la vitesse du vent incident $V_w$ déterminée lors de l'étape de construction du modèle de dynamique du rotor, et la mesure du régime du rotor $\Omega_r^{sp}$ et le couple consigne $T_{aero}^{strat}$. En inversant le modèle (par un algorithme de Newton par exemple), on obtient une consigne de pitch $\overline{\theta}$ :

$$\overline{\theta} = \arg\left( \min_\theta \left( T_{aero}^{strat} - 0.5\rho\Pi R_b^3 c_q\left(\theta, \frac{R_b\Omega_r}{V_w}\right) V_w{}^2 \right) \right)$$

Ainsi, avec cette loi de commande, on garantit la convergence vers la vitesse rotor de référence, permettant de maximiser la puissance récupérée, tout en minimisant l'impact mécanique (fatigue et moment extrême) sur la transmission.

*6 - Orientation des pales selon le pitch déterminé*

Pour optimiser la puissance électrique récupérée par l'éolienne, on oriente les pales selon l'angle d'inclinaison calculé à l'étape précédente.

**Revendications**

1. Procédé de contrôle d'une éolienne, ladite éolienne comportant un rotor sur lequel est fixée au moins une pale, et une machine électrique reliée audit rotor, dans lequel on connaît un angle d'inclinaison $\theta$ de ladite pale et un couple électrique $T_e$ de récupération de ladite machine électrique, **caractérisé en ce qu'**il comporte les étapes suivantes :

   a) on construit un modèle de dynamique dudit rotor en appliquant le principe fondamental de la dynamique au niveau dudit rotor, ledit modèle reliant la vitesse du vent incident à ladite éolienne $V_w$ à une vitesse de rotation dudit rotor $\Omega_r$, audit angle d'inclinaison $\theta$ de ladite pale et audit couple électrique $T_e$ et ledit modèle de dynamique

   $$J_r \frac{d\Omega_r}{dt} = T_{aero} - T_l(\Omega_r) - NT_e$$

   du rotor s'écrit par une formule du type : avec $J_r$ l'inertie dudit rotor, $T_{aéro}$ le couple aérodynamique appliqué sur ledit rotor qui dépend de ladite vitesse du vent incident $V_w$, de ladite vitesse de rotation dudit rotor $\Omega_r$ et dudit angle d'inclinaison $\theta$, $T_l(\Omega_r)$ le couple de frottement et de charge sur le rotor qui dépend de ladite vitesse de rotation dudit rotor $\Omega_r$, N le rapport de transmission entre ledit rotor et ladite machine électrique; dans lequel ledit couple aérodynamique appliqué sur ledit rotor s'écrit par une formule

   $$T_{aero} = 0.5\rho\Pi R_b^3 c_q\left(\theta, \frac{R_b\Omega_r}{V_w}\right)V_w^2$$

   de la forme : avec $R_b$ le rayon dudit rotor, $p$ la densité de l'air, $c_q$ est un paramètre déterminé au moyen d'un cartographie du rotor en fonction dudit angle d'inclinaison $\theta$ et du

   rapport $\dfrac{R_b\Omega_r}{V_w}$,

   b) on mesure ladite vitesse de rotation dudit rotor $\Omega_r$ ;
   c) on détermine ladite vitesse du vent incident $V_w$ au moyen dudit modèle de dynamique du rotor, de ladite vitesse de rotation dudit rotor $\Omega_r$ mesurée et dudit angle d'inclinaison $\theta$ de ladite pale et dudit couple électrique $T_e$ : ladite vitesse du vent incident $V_w$ étant considérée comme une perturbation harmonique, ladite vitesse du

   $$V_w(t) = \sum_{k=-p}^{p} c_k e^{(i\omega_k t)}$$

   vent incident $V_w$ pouvant s'écrire par une formule du type: avec p le nombre d'harmoniques considérés, $\omega_k$ est la fréquence de l'harmonique k déterminée de préférence au moyen d'une

   formule du type : $\omega_k = 3\dfrac{k}{p}$, $c_k$ le coefficient de l'harmonique k, on détermine ladite vitesse du vent incident $V_w$ en déterminant les paramètres $\omega_k$ et $c_k$ au moyen dudit modèle dynamique du rotor, puis on en déduit ladite vitesse du vent incident $V_w$ ; et

   d) on contrôle ledit angle d'inclinaison $\theta$ de ladite pale et/ou ledit couple électrique $T_e$ de récupération en fonction de ladite vitesse du vent incident $V_w$ pour optimiser la production d'énergie de ladite éolienne.

2. Procédé selon la revendication 1 dans lequel on détermine les coefficients $c_k$ en résolvant un système d'équations de la forme:

$$\begin{cases} J_r \dfrac{d\Omega_r}{dt} = 0.5\rho\Pi R_b^3 c_q\left(\theta, \dfrac{R_b\Omega_r}{\sum\limits_{k=-p}^{p} c_k e^{(i\omega_k t)}}\right)\left(\sum\limits_{k=-p}^{p} c_k e^{(i\omega_k t)}\right)^2 - T_l(\Omega_r) - NT_e - J_r L_\Omega(\Omega_r - \Omega) \\[4mm] \dfrac{dc_k}{dt} = -L_k e^{(-i\omega_k t)}(\Omega_r - \Omega) \quad pour\ tout\ k \in [-p, p] \end{cases}$$

avec $L_\Omega$ un gain qui contrôle la vitesse de convergence de l'estimation de ladite vitesse de rotation du rotor, $L_k$ un gain qui contrôle la vitesse de convergence de la décomposition harmonique, et $\Omega$ représente la vitesse mesurée du rotor.

3. Procédé selon la revendication 2, dans lequel ledit gain $L_\Omega$ vaut sensiblement 1 et ledit gain $L_k$ est déterminé par une formule du type : $$L_k = \frac{10}{1 + \omega_k^2}.$$ $L_k$

4. Procédé selon l'une des revendications précédentes, dans lequel on contrôle ledit angle d'inclinaison $\theta$ au moyen des étapes suivantes :

   i) on détermine une consigne de couple aérodynamique $T_{aero}^{sp}$ et une consigne de couple de la machine électrique $T_e^{sp}$ permettant de maximiser la puissance récupérée, à partir de ladite vitesse de vent incident $V_w$, de mesures de ladite vitesse de rotation du rotor $\Omega_r$ et de la vitesse de rotation de l'arbre de la machine électrique $\Omega_e$ ;

   ii) on modifie au moins l'une desdites consignes en lui soustrayant un terme proportionnel à un écart entre vitesse mesurée du rotor $\Omega_r$ et vitesse mesurée de la machine électrique $\Omega_e$ ;

   iii) on détermine un angle d'inclinaison $\theta^{sp}$ de ladite pale permettant de réaliser ladite consigne de couple aérodynamique $T_{aero}^{sp}$ ; et

   iv) on oriente ladite pale selon ledit angle d'inclinaison $\theta^{sp}$.

5. Procédé selon la revendication 4, dans lequel on modifie au moins l'une desdites consignes en réalisant les étapes suivantes :

   (1) on détermine un couple $\overline{T}_{res}$ sur ladite transmission résultant desdites consignes de couple aérodynamique $T_{aero}^{sp}$ et de couple de la machine électrique $T_e^{sp}$ ;

   (2) on détermine une consigne de couple résultant $T_{res}^{sp}$ en soustrayant audit couple résultant $\overline{T}_{res}$ un terme proportionnel à l'écart entre la vitesse mesurée du rotor $\Omega_r$ et la vitesse mesurée de la machine électrique $\Omega_e$ ; et

   (3) on modifie ladite consigne de couple aérodynamique $T_{aero}^{sp}$ en répartissant ladite consigne de couple résultant $T_{res}^{sp}$ en un couple aérodynamique $T_{aero}^{sp}$ et un couple de la machine électrique $T_e^{sp}$.

6. Procédé selon la revendication 5, dans lequel ladite consigne de couple résultant $T_{res}^{sp}$ s'écrit :

$$T_{res}^{sp} = \overline{T}_{res} - k\dot{\gamma}_{tr}$$ avec k des paramètres de calibration strictement positif, et $\dot{\gamma}_{tr}$ vitesse d'une torsion de la transmission, égale à une différence de vitesse du rotor $\Omega_r$ et de la machine électrique $\Omega_e$ ramenée sur un même axe : $$\dot{\gamma}_{tr} = \Omega_r - \frac{1}{N}\Omega_e,$$ où N est un rapport de transmission entre ledit rotor et ladite machine électrique.

7.  Procédé selon l'une des revendications 4 à 6, dans lequel on détermine l'angle d'inclinaison de ladite pale en inversant un modèle de couple aérodynamique et en utilisant ladite vitesse de vent incident $V_w$ et la mesure de la vitesse du rotor $\Omega_r$.

8.  Procédé selon l'une des revendications 4 à 7, dans lequel on détermine le terme proportionnel en utilisant un modèle de la dynamique de la transmission.

**Patentansprüche**

1.  Verfahren zur Steuerung einer Windenergieanlage, wobei die Windenergieanlage einen Rotor, an welchem mindestens ein Rotorblatt befestigt ist, und eine mit dem Rotor verbundene elektrische Maschine umfasst, wobei ein Neigungswinkel $\theta$ des Rotorblattes und ein elektrisches Rekuperationsmoment $T_e$ der elektrischen Maschine bekannt sind, **dadurch gekennzeichnet, dass** es die folgenden Schritte umfasst:

    a) Es wird ein Dynamikmodell des Rotors erstellt, indem das Grundprinzip der Dynamik auf den Rotor angewendet wird, wobei dieses Modell die Geschwindigkeit des an der Windenergieanlage ankommenden Windes $V_w$ mit einer Drehzahl des Rotors $\Omega_r$, mit dem Neigungswinkel $\theta$ des Rotorblattes und mit dem elektrischen Moment $T_e$ verknüpft, und das Dynamikmodell des Rotors wird durch eine Formel vom Typ

    $$J_r \frac{d\Omega_r}{dt} = T_{aero} - T_l(\Omega_r) - NT_e$$

    beschrieben, wobei $J_r$ die Trägheit des Rotors ist, $T_{aero}$ das auf den Rotor einwirkende aerodynamische Moment ist, welches von der Geschwindigkeit des ankommenden Windes $V_w$, von der Drehzahl des Rotors $\Omega_r$ und vom Neigungswinkel $\theta$ abhängt, $T_l(\Omega_r)$ das Reib- und Lastmoment am Rotor ist, welches von der Drehzahl des Rotors $\Omega_r$ abhängt, N das Übersetzungsverhältnis zwischen dem Rotor und der elektrischen Maschine; wobei das auf den Rotor einwirkende aerodynamische Moment durch ein Formel

    $$T_{aero} = 0{,}5\,\rho \Pi R_b^3 c_q \left(\theta, \frac{R_b \Omega_r}{V_w}\right) V_w^2$$

    der Form beschrieben wird, wobei $R_b$ der Radius des Rotors ist, $p$ die Dichte der Luft ist, $c_q$ ein Parameter ist, der mittels eines Kennfeldes des Rotors in Abhängigkeit vom Neigungswinkel $\theta$ und vom Verhältnis $\frac{R_b \Omega_r}{V_w}$ bestimmt wird;

    b) es wird die Drehzahl des Rotors $\Omega_r$ gemessen;

    c) es wird die Geschwindigkeit des ankommenden Windes $V_w$ mittels des Dynamikmodells des Rotors, der gemessenen Drehzahl des Rotors $\Omega_r$ und des Neigungswinkels $\theta$ des Rotorblattes und des elektrischen Moments $T_e$ bestimmt; wobei, wenn die Geschwindigkeit des ankommenden Windes $V_w$ als eine harmonische Störung betrachtet wird, wobei die Geschwindigkeit des ankommenden Windes $V_w$ durch eine Formel vom Typ

    $$V_w(t) = \sum_{k=-p}^{p} c_k e^{(i\omega_k t)}$$

    beschrieben werden kann, wobei p die Anzahl der betrachteten Harmonischen ist, $\omega_k$ die Frequenz der Harmonischen k ist, die vorzugsweise mittels einer Formel des Typs $\omega_k = 3\frac{k}{p}$ bestimmt wird, $c_k$ der Koeffizient der Harmonischen k ist, die Geschwindigkeit des ankommenden Windes $V_w$ bestimmt wird, indem die Parameter $\omega_k$ und $c_k$ mittels des Dynamikmodells des Rotors bestimmt werden und anschließend daraus die Geschwindigkeit des ankommenden Windes $V_w$ abgeleitet wird; und

    d) es werden der Neigungswinkel $\theta$ des Rotorblattes und/oder das elektrische Rekuperationsmoment $T_e$ in Abhängigkeit von der Geschwindigkeit des ankommenden Windes $V_w$ gesteuert, um die Energieerzeugung der Windenergieanlage zu optimieren.

2.  Verfahren nach Anspruch 1, wobei die Koeffizienten $c_k$ bestimmt werden, indem ein Gleichungssystem der Form

$$\begin{cases} J_r \dfrac{d\Omega_r}{dt} = 0.5\rho\Pi R_b^3 c_q\left(\theta, \dfrac{R_b\Omega_r}{\displaystyle\sum_{k=-p}^{p} c_k e^{(i\omega_k t)}}\right)\left(\sum_{k=-p}^{p} c_k e^{(i\omega_k t)}\right)^2 - T_l(\Omega_r) - NT_e - J_r L_\Omega(\Omega_r - \Omega) \\[2em] \dfrac{dc_k}{dt} = -L_k e^{(-i\omega_k t)}(\Omega_r - \Omega) \quad \text{für alle } k \in [-p, p] \end{cases}$$

gelöst wird, wobei $L_\Omega$ ein Verstärkungsfaktor ist, welcher die Konvergenzgeschwindigkeit der Schätzung der Drehzahl des Rotors steuert, $L_k$ ein Verstärkungsfaktor ist, welcher die Konvergenzgeschwindigkeit der harmonischen Zerlegung steuert, und $\Omega$ die gemessene Drehzahl des Rotors bezeichnet.

3. Verfahren nach Anspruch 2, wobei der Verstärkungsfaktor $L_\Omega$ im Wesentlichen 1 beträgt und der Verstärkungsfaktor

$$L_k = \frac{10}{1 + \omega_k^2}$$

$L_k$ durch eine Formel vom Typ bestimmt wird.

4. Verfahren nach einem der vorhergehenden Ansprüche, wobei der Neigungswinkel $\theta$ mittels der folgenden Schritte gesteuert wird:

   i) Es werden ein Sollwert des aerodynamischen Moments $T_{aero}^{sp}$ und ein Sollwert des Drehmoments der elektrischen Maschine $T_e^{sp}$, die es ermöglichen, die gewonnene Energie zu maximieren, aus der Geschwindigkeit des ankommenden Windes $V_w$ sowie Messwerten der Drehzahl des Rotors $\Omega_r$ und der Drehzahl der Welle der elektrischen Maschine $\Omega_e$ bestimmt;
   ii) es wird wenigstens einer dieser Sollwerte geändert, indem ein Term von ihm subtrahiert wird, der zu einer Abweichung zwischen der gemessenen Drehzahl des Rotors $\Omega_r$ und der gemessenen Drehzahl der elektrischen Maschine $\Omega_e$ proportional ist;
   iii) es wird ein Neigungswinkel $\theta^{sp}$ des Rotorblatts bestimmt, der es ermöglicht, den Sollwert des aerodynamischen Moments $T_{aero}^{sp}$ zu realisieren; und
   iv) das Rotorblatt wird in diesem Neigungswinkel $\theta^{sp}$ ausgerichtet.

5. Verfahren nach Anspruch 4, wobei wenigstens einer der Sollwerte geändert wird, indem die folgenden Schritte durchgeführt werden:

   (1) Es wird ein Drehmoment $\overline{T}_{res}$ an dem Getriebe bestimmt, das aus den Sollwerten des aerodynamischen Moments $T_{aero}^{sp}$ und des Drehmoments der elektrischen Maschine $T_e^{sp}$ resultiert;

   (2) es wird ein Sollwert des resultierenden Drehmoments $T_{res}^{sp}$ bestimmt, indem von dem resultierenden Drehmoment $\overline{T}_{res}$ ein Term subtrahiert wird, der zu der Abweichung zwischen der gemessenen Drehzahl des Rotors $\Omega_r$ und der gemessenen Drehzahl der elektrischen Maschine $\Omega_e$ proportional ist; und

   (3) es wird der Sollwert des aerodynamischen Moments $T_{aero}^{sp}$ geändert, indem der Sollwert des resultierenden Drehmoments $T_{res}^{sp}$ in ein aerodynamisches Moment $T_{aero}^{sp}$ und ein Drehmoment der elektrischen Maschine $T_e^{sp}$ aufgeteilt wird.

6. Verfahren nach Anspruch 5, wobei der Sollwert des resultierenden Drehmoments $T_{res}^{sp}$ in der Form

$$T_{res}^{sp} = \overline{T_{res}} - k\dot{\gamma}_{tr}$$

geschrieben wird, wobei k ein streng positiver Kalibrierungsparameter ist und $\dot{\gamma}_{tr}$ die Geschwindigkeit einer Torsion des Getriebes ist, die gleich einer Differenz der Drehzahl des Rotors $\Omega_r$ und der elek-

trischen Maschine $\Omega_e$ ist, zurückgeführt auf ein und dieselbe Achse: $\dot{\gamma}_{tr} = \Omega_r - \frac{1}{N}\Omega_e$, wobei N ein Übersetzungsverhältnis zwischen dem Rotor und der elektrischen Maschine ist.

**7.** Verfahren nach einem der Ansprüche 4 bis 6, wobei der Neigungswinkel des Rotorblattes bestimmt wird, indem ein Modell des aerodynamischen Moments invertiert wird und indem die Geschwindigkeit des ankommenden Windes $V_w$ und der Messwert der Drehzahl des Rotors $\Omega_r$ verwendet werden.

**8.** Verfahren nach einem der Ansprüche 4 bis 7, wobei der proportionale Term bestimmt wird, indem ein Modell der Dynamik des Getriebes verwendet wird.

**Claims**

**1.** Method for controlling a wind turbine, said wind turbine comprising a rotor to which is fixed at least one blade, and an electrical machine linked to said rotor, wherein an angle of inclination $\theta$ of said blade and an electrical harvesting torque $T_e$ of said electrical machine are known, **characterized in that** it comprises the following steps:

a) a dynamic model of said rotor is constructed by applying the fundamental principle of dynamics to said rotor, said model linking the speed of the incident wind on said wind turbine $V_w$ to a speed of rotation of said rotor $\Omega_r$, to said angle of inclination $\theta$ of said blade and to said electrical torque $T_e$ and said dynamic model of the rotor is expressed by a formula of the type:

$$J_r \frac{d\Omega_r}{dt} = T_{aero} - T_l(\Omega_r) - NT_e$$

with $J_r$ the inertia of said rotor, $T_{aero}$ the aerodynamic torque applied to said rotor which depends on said incident wind speed $V_w$, on said speed of rotation of said rotor $\Omega_r$, and on said angle of inclination $\theta$, $T_l(\Omega_r)$ the friction and load torque on the rotor which depends on said speed of rotation of said rotor $\Omega_r$, N the transmission ratio between said rotor and said electrical machine; wherein said aerodynamic torque applied to said rotor is ex-

$$T_{aero} = 0.5\rho\Pi R_b^3 c_q\left(\theta, \frac{R_b\Omega_r}{V_w}\right)V_w^2$$

pressed by a formula of the form: with $R_b$ the radius of said rotor, $\rho$ the density of the air, $c_q$ is a parameter determined by means of a mapping of the rotor as a function of said angle of inclination $\theta$ and of the ratio $\frac{R_b\Omega_r}{V_w}$,

b) said speed of rotation of said rotor $\Omega_r$ is measured;

c) said incident wind speed $V_w$ is determined by means of said dynamic model of the rotor, of said measured speed of rotation of said rotor $\Omega_r$ and of said angle of inclination $\theta$ of said blade and of said electrical torque $T_e$; said incident wind speed $V_w$ being considered as a harmonic disturbance, said incident wind speed $V_w$ being

$$V_w(t) = \sum_{k=-p}^{p} c_k e^{(i\omega_k t)}$$

able to be expressed by a formula of the type: with $p$ the number of harmonics considered, $\omega_k$ is the frequency of the harmonic k determined preferably by means of a formula of the type:

$\omega_k = 3\frac{k}{p}$, $c_k$ the coefficient of the harmonic k, said incident wind speed $V_w$ is determined by determining the parameters $\omega_k$ and $c_k$ by means of said dynamic model of the rotor, then said incident wind speed $V_w$ is deduced therefrom; and

d) said angle of inclination $\theta$ of said blade and/or said electrical harvesting torque $T_e$ are controlled as a function of said incident wind speed $V_w$ to optimize the production of energy from said wind turbine.

2. Method according to Claim 1, wherein the coefficients $c_k$ are determined by solving a system of equations of the form:

$$\begin{cases} J_r \dfrac{d\Omega_r}{dt} = 0.5\rho\Pi R_b^3 c_q\left(\theta, \dfrac{R_b\Omega_r}{\sum_{k=-p}^{p} c_k e^{(i\omega_k t)}}\right)\left(\sum_{k=-p}^{p} c_k e^{(i\omega_k t)}\right)^2 - T_t(\Omega_r) - NT_e - J_r L_\Omega(\Omega_r - \Omega) \\ \\ \dfrac{dc_k}{dt} = -L_k e^{(-i\omega_k t)}(\Omega_r - \Omega) \quad \textit{for any} \quad k \in [-p, p] \end{cases}$$

with $L_\Omega$ a gain which controls the speed of convergence of the estimation of said speed of rotation of the rotor, $L_k$ a gain which controls the speed of convergence of the harmonic breakdown, and $\Omega$ represents the measured speed of the rotor.

3. Method according to Claim 2, wherein said gain $L_\Omega$ is substantially 1 and said gain $L_k$ is determined by a formula of the type:

$$L_k = \frac{10}{1 + \omega_k^2}.$$

4. Method according to one of the preceding claims, wherein said angle of inclination $\theta$ is controlled by means of the following steps:

i) an aerodynamic torque setpoint $T_{aero}^{sp}$ and an electrical machine torque setpoint $T_e^{sp}$ making it possible to maximize the power harvested are determined from said incident wind speed $V_w$, from measurements of said speed of rotation of the rotor $\Omega_r$ and from the speed of rotation of the shaft of the electrical machine $\Omega_e$;
ii) at least one of said setpoints is modified by subtracting from it a term proportional to a deviation between measured speed of the rotor $\Omega_r$ and measured speed of the electrical machine $\Omega_e$;
iii) an angle of inclination $\theta^{sp}$ of said blade that makes it possible to realize said aerodynamic torque setpoint $T_{aero}^{sp}$ is determined; and
iv) said blade is oriented according to said angle of inclination $\theta^{sp}$.

5. Method according to Claim 4, wherein at least one of said setpoints is modified by carrying out the following steps:

(1) a torque $\overline{T}_{res}$ on said transmission is determined that results from said aerodynamic torque $T_{aero}^{sp}$ and electrical machine torque $T_e^{sp}$ setpoints;

(2) a resultant torque setpoint $T_{res}^{sp}$ is determined by subtracting from said resultant torque $\overline{T}_{res}$ a term proportional to the deviation between the measured speed of the rotor $\Omega_r$ and the measured speed of the electrical machine $\Omega_e$; and

(3) said aerodynamic torque setpoint $T_{aero}^{sp}$ is modified by apportioning said resultant torque setpoint $T_{res}^{sp}$ as an aerodynamic torque $T_{aero}^{sp}$ and an electrical machine torque $T_e^{sp}$.

6. Method according to Claim 5, wherein said resultant torque setpoint $T_{res}^{sp}$ is expressed: with k strictly positive calibration parameters and a transmission torsion speed, equal to a difference in speed of the rotor $\Omega_r$ and of the electrical machine $\Omega_e$, both related to one and the same axis: $\dot{\gamma}_{tr} = \Omega_r - \dfrac{1}{N}\Omega_e,$ where N is a transmission ratio between said rotor and said electrical machine.

7. Method according to one of Claims 4 to 6, wherein the angle of inclination of said blade is determined by inverting an aerodynamic torque model and by using said incident wind speed $V_w$ and the measurement of the speed of the

rotor $\Omega_r$.

8. Method according to one of Claims 4 to 7, wherein the proportional term is determined by using a model of the dynamics of the transmission.

Figure 1

Figure 2

Figure 3

MES $(\Omega_r, \Omega_e)$

$\Omega^{sp}$ → E1 → $\theta$ → E2 → $T_{res}$ → E3 → $T_{res}{}^{sp}$ → E4 → $T_{aero}{}^{sp}$, $T_e^{sp}$ → E5 → $\theta^{sp}$

$V_w$

**Figure 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5155375 A

**Littérature non-brevet citée dans la description**

- **BOUKHEZZAR B. ; LUPU L. ; SIGUERDIDJANE H. ; HAND M.** Multivariable control strategy for variable speed, variable pitch wind turbines. *Renewable Energy,* 2007, vol. 32, 1273-1287

- **BOUKHEZZAR B. ; SIGUERDIDJANE H.** Nonlinear control of variable speed wind turbine without wind speed measurement. *IEEE Control and Decision Conférence,* 2005